# EUROPEAN PATENT SPECIFICATION

(11) **EP 1 876 374 B1**
(45) Date of publication and mention of the grant of the patent: **19.05.2010**
(21) Application number: 05734446.7
(22) Date of filing: 25.04.2005
(51) Int. Cl.: F16G 11/12, B60P 7/135, B65D 63/16

(54) **BELT FASTENING DEVICE**
GURTBEFESTIGUNGSVORRICHTUNG
DISPOSITIF POUR ATTACHER UNE CEINTURE

(43) Date of publication of application: 09.01.2008
(73) Proprietor: Ashimori Industry Co., Ltd., Osaka-shi, Osaka 550-0014 (JP)
(72) Inventor: TOMOSUE, Motoharu, 5650822 (JP)
(74) Representative: Müller, Gerald Christian
(86) International application number: PCT/JP2005/007836
(87) International publication number: WO 2006/114889

(56) References cited:
- JP-A- 2001 227 567
- JP-A- 2003 222 198
- JP-A- 2003 222 198
- JP-A- 2004 346 951

## Description

### Technical Field

The present invention relates to a belt tightener used for, for example, fixing a load on a truck or the like.

### Background Art

Conventionally, as belt tighteners that tighten and release belts laid between sidewalls of the beds of trucks for fixing loads on the truck beds, ones with a variety of structures have been known. Among those, the following ratchet type belt tightener has been widely used. A general ratchet type belt tightener includes a belt take-up shaft that takes up belts, a ratchet gear provided with this belt take-up shaft at a center portion so as to penetrate therethrough and formed with a gear portion therearound, a latch pawl that is engageably urged against the gear portion of the ratchet gear so as to turn the ratchet gear in only one direction, and a handle that is capable of turning the belt take-up shaft in a wind-tightening direction.

And, when fixing a load by use of this ratchet type belt tightener, one end of each one of the two belts is fixed to the sidewall of a truck, and the other end thereof is coupled to the belt tightener at almost the center part of the truck bed. Then, the belt take-up shaft is turned by the handle in the wind-tightening direction to take up the belts, and the load is fastened with the belts so as to be fixed.

However, in this ratchet type belt tightener, when performing a drawing operation of the belts while turning the ratchet gear with the handle, since the latch pawl to prevent a reversal rotation of the ratchet gear rapidly moves from a projection of its gear portion to a recess to abut thereagainst, a large collision noise occurs. And thus, with the conventional ratchet type belt tightener, since a large noise occurs in the surrounding area at the time of a drawing operation of the belts, this has presented a large problem for, particularly, trucks that carry goods to convenience stores and the like in the early morning or nighttime.

Therefore, the applicant of the present application has proposed a belt tightener that is capable of preventing the occurrence of noise at the time of a drawing operation of the belts, see JP2003222198 (Patent Document 1) which shows the preamble of independent claim 1. A belt take-up mechanism of this belt tightener includes a belt take-up shaft supported about an axis on a body frame, a handle supported about an axis on the body frame so as to be coaxial with the belt take-up shaft, a first one-way clutch and a second one-way clutch fixed to both end portions of the belt take-up shaft, respectively, and set in identical directions in terms of a slipping state and a meshing state, a first latch provided on the handle and engageable with and disengageable from an outer wheel member of the first one-way clutch, and a second latch provided on the body frame and engageable with and disengageable from an outer wheel member of the second one-way clutch.

When performing a drawing operation of belts by this belt tightener, while the first latch is engaged with the first one-way clutch and the second latch is engaged with the second one-way clutch, first, the handle is turned in a direction where both one-way clutches reach a slipping state. At this time, in the first one-way clutch, the outer wheel member turns in conjunction with the handle and the first latch, however, this turn of the outer wheel member is not transmitted to an inner wheel member through which the belt take-up shaft is inserted, so that the belt take-up shaft does not turn. Then, when the handle is turned in a direction where both one-way clutches reach a meshing state, the first latch and the outer wheel member of the first one-way clutch turn in conjunction with the handle, and the turn of the handle is transmitted to the belt take-up shaft via the first latch and the first one-way clutch, so that the belts are taken up by the belt take-up shaft. Also, at this time of a take-up operation of the belts, a force in the belt unwinding direction always acts on the belt take-up shaft due to tension of the belts taken up by the belt take-up shaft, however, since the second latch has been engaged with the outer wheel member of the second one-way clutch, a turn of the belt take-up shaft in the unwinding direction is restricted, so that the belts taken up by the belt take-up shaft are never unwound.

According to this belt tightener, even when the handle is turned in any direction, the first latch and the second latch never hit the outer wheel members of the one-way clutches, so that no such large noise occurs as a collision noise between the ratchet gear and latch pawl as in the conventional ratchet type belt tightener.

Patent Document 1: Japanese Published Unexamined Patent Application No. 2003-222198

### Disclosure of the Invention

### Problems to be Solved by the Invention

However, in the belt tightener according to Patent Document 1 described above, since a force that acts on the handle at the take-up time of the belts is transmitted to the belt take-up shaft via only the first one-way clutch provided at one end portion of the belt take-up shaft, distortion easily occurs at the first one-way clutch. And, when distortion occurs at the first one-way clutch, a greater force is required for turning the handle. However, in recent years, there are an increased number of occasions where a tightening operation of the belts is performed by an operator with relatively weak strength such as a woman, and in such a case, as a result of insufficient tightening of the belts, the load may not be reliably fixed. In addition, the one-way clutches are composed of a large number of components such as inner wheel members and outer wheel members, and it is not easy to replace a one-way clutch with distortion.

It is an object of the present invention to provide a belt tightener that is capable of tightening belts reliably by a smaller force and thus is excellent in operability.

### Means for Solving the Problems and Effects of the Invention

As a belt tightener according to a first aspect of the invention, in a belt tightener to whose one end portion and other end portion a first belt and a second belt are coupled, respectively, and which produces and releases tension for these belts, the belt tightener has: a body frame; and a belt take-up mechanism provided at one end portion of the body frame and is capable of taking up and unwinding the first belt, the belt take-up mechanism includes: a belt take-up shaft which is supported about an axis on the body frame and by which the first belt is taken up; a handle supported about an axis on the body frame so as to be coaxial with the belt take-up shaft; a first one-way clutch and a second one-way clutch both provided on the belt take-up shaft and set in identical directions in terms of a slipping state and a meshing state; a first latch provided so as to be relatively movable on the handle and engageable with and disengageable from the first one-way clutch while being urged to the belt take-up shaft side; and a second latch provided so as to be relatively movable on the body frame and engageable with and disengageable from the second one-way clutch while being urged to the belt take-up shaft side, each one-way clutch has an inner wheel member through which the belt take-up shaft is inserted and an outer wheel member externally fitted to this inner wheel member so as to be freely slidable, further, to both side surfaces of the inner wheel member, two cover plates that block a space portion between the outer wheel member and the inner wheel member are fixed, respectively, and the inner wheel member, the outer wheel member, and the two cover plates are integrally formed.

When producing tension in the belts for tightening by this belt tightener, first, while the first latch is engaged with the first one-way clutch and the second latch is engaged with the second one-way clutch, the handle is turned in a direction where both one-way clutches reach a slipping state. Then, since the first one-way clutch is in a slipping state, a turning force of the handle (first latch) is not transmitted to the belt take-up shaft, so that the first belt is not taken up. Then, when the handle is turned in a direction where both one-way clutches reach a meshing state, since the first latch and the outer wheel member of the first one-way clutch are turned in conjunction with the handle, the turn of the handle is transmitted to the belt take-up shaft via the first one-way clutch, so that the belt is taken up by the belt take-up shaft. Also, at this take-up time of the first belt, due to the tension of the first belt taken up by the belt take-up shaft, a force in the belt unwinding direction always acts on the belt take-up shaft, however, since the second latch is engaged with the second one-way clutch, the belt take-up shaft does not rotate in the belt unwinding direction, so that the belt is never unwound. According to this belt tightener, since the first latch and the second latch never hit the outer wheel member of the one-way clutch at the time of a turn of the handle, no such large noise occurs as a collision noise between the ratchet gear and latch pawl as in the conventional ratchet type belt tightener.

Here, at the take-up time of the first belt, a force from the handle acts on only the first one-way clutch fixed to one end portion of the belt take-up shaft. However, since the two cover plates have been respectively fixed to both side surfaces of the inner wheel member of each one-way clutch, strength of the one-way clutch as a whole is increased, so that it becomes less likely that the first one-way clutch is distorted. Accordingly, it becomes possible to lightly turn the handle by a small force. Furthermore, by the cover plates on both side surfaces of the inner wheel member, the outer wheel member has been prevented from coming off from the inner wheel member, and the inner wheel member, outer wheel member, and two cover plates have been integrally formed, whereby the one-way clutch has been unitized, and thus even if the first one-way clutch is distorted, the one-way clutch can be easily replaced.

As a belt tightener according to a second aspect of the invention, in the first aspect of the invention, a fixing portion of the inner wheel member and the cover plate is protruded from a surface of the cover plate, and a gap exists between the handle and the cover plate. And thus, for the reason that the fixing portion is protruded from the cover plate so that a gap is formed between the cover plate and handle, the one-way clutch is less likely to contact the handle, so that it becomes possible to turn the handle smoothly.

As a belt tightener according to a third aspect of the invention, in the first aspect of the invention, a corner on one side surface of the outer wheel member is formed round. Although it is necessary for the first and second one-way clutches, so as to be identical in directions of a slipping state and a meshing state, to be attached to the belt take-up shaft with a predetermined orientation, since the space portion of the outer wheel member and inner wheel member has been blocked by the cover plates, it is not easy to judge a slipping direction and a meshing direction of each unitized one-way clutch from its appearance. However, in this belt tightener according to the third aspect of the invention, since the corner on one side surface of the outer wheel member is formed round, it becomes less likely that the one-way clutch is oriented incorrectly when being attached. Therefore, an assembling operation of the belt tightener is improved in efficiency.

As a belt tightener according to a fourth aspect of the invention, in the first aspect of the invention, the space portion between the outer wheel member and the inner wheel member is formed so that its gap is enlarged along a circumferential direction, in the space portion, a roller member having a diameter equal to the gap at a circumferential middle portion thereof and a coil spring that urges this roller member in a contracting direction of the gap of the space portion, the roller member is formed in a columnar shape having a length almost equal to a thickness of the inner wheel member, and a shape of the coil spring viewed from its expanding and contracting direction is an oval shape.

When the outer wheel member turns in one direction and the roller member moves in the direction where the gap of the space portion is enlarged against an urging force of the coil spring, the turn of the outer wheel member is not transmitted to the inner wheel member, so that the one-way clutch reaches a slipping state. On the other hand, when the outer wheel member turns in the opposite direction and the roller member moves in the direction where the gap of the space portion is contracted, the roller member gets stuck in the middle portion of the space portion, so that the one-way clutch reaches a meshing state where the turn of the outer wheel member is transmitted to the inner wheel member via the roller member. Here, since the roller member has been formed in a columnar shape having a length almost equal to a thickness of the inner wheel member, in comparison with when the roller member is in a spherical shape, a contact area of the roller member between the inner wheel member and outer wheel member is increased, so that even with a roller member having a relatively small diameter, it becomes possible to transmit a large load. Accordingly, the diameter of the roller member is reduced to the utmost extent allowing transmitting a necessary load so that the outside diameter of the outer wheel member can be reduced as much as possible. Consequently, it becomes possible to turn the outer wheel member by a smaller force, and this allows taking up the belts more easily.

As a belt tightener according to a fifth aspect of the invention, in the first aspect of the invention, the first latch has a flat plate portion that extends parallel to its moving direction, a slope portion that extends to a side opposite the belt take-up shaft in a state inclined with respect to the flat plate portion, and a pull portion provided at an end portion of this slope portion on the side opposite the belt take-up shaft, and the pull portion is located on a plane extended from the flat plate portion to the side opposite the belt take-up shaft. Accordingly, pulling the pull portion allows moving the first latch to the side opposite the belt take-up shaft, so that it becomes easy to release a meshing state with the first one-way clutch. In addition, the pull portion is located on a plane extended from the flat plate portion to the side opposite the belt take-up shaft. Accordingly, since the first latch linearly moves in the direction of a force applied to the pull portion, it becomes possible to move the first latch by a smaller force.

As a belt tightener according to a sixth aspect of the invention, in the first aspect of the invention, the handle has two handle support plates arranged symmetrically at both end portions of the belt take-up shaft, and a grasping member provided at end portions of these two handle support plates on a side opposite the belt take-up shaft, the first latch is supported so as to be relatively movable on the two handle support plates, and on a surface of the first latch, formed are two first convex portions that guide a relative movement with respect to the two handle support plates. And thus, since a relative movement of the first latch with respect to the handle support plates is guided by the two first convex portions, it becomes easier to move the first latch, so that operability is improved. In addition, since rattling can be prevented even without strict control of machining accuracy of the first latch and the handle support plates, there is also an advantage in the aspect of a component cost.

As a belt tightener according to a seventh aspect of the invention, in the first aspect of the invention, the body frame has two frame plates that support both end portions of the belt take-up shaft about axes, respectively, the second latch is supported so as to be relatively movable on the two frame plates, and on a surface of the second latch, formed are two second convex portions that guide a relative movement with respect to the two frame plates. And thus, since a relative movement of the second latch with respect to the frame plates is guided by the two second convex portions, it becomes easier to move the second latch, so that operability is improved. In addition, since rattling can be prevented even without strict control of machining accuracy of the second latch and the frame plates, there is also an advantage in the aspect of a component cost.

A belt tightener according to an eighth aspect of the invention, in the seventh aspect of the invention, in the two frame plates, slits through which the second latch is inserted are formed, respectively, further, in at least one of the frame plates, continuously from the slit, formed is a notch portion through which the second convex portion of the second latch can be inserted, and in a state where the second latch has been inserted through the slits of the two frame plates and supported, the notch portion and the second convex portion are displaced in terms of a moving direction of the second latch. The second latch is inserted through the slits respectively formed in the two frame plates and is supported. At that time of fitting, the second convex portion is inserted through the notch portion continuous from the slit and is arranged inside the two frame plates. Here, since the positional relationship between the second convex portion of the second latch after having been fitted to the body frame and notch portion is displaced in terms of the moving direction of the second latch, the second latch is latched by the second convex portion, whereby the second latch is prevented from coming off from the slit after fitting.

### Best Mode for Carrying Out the Invention

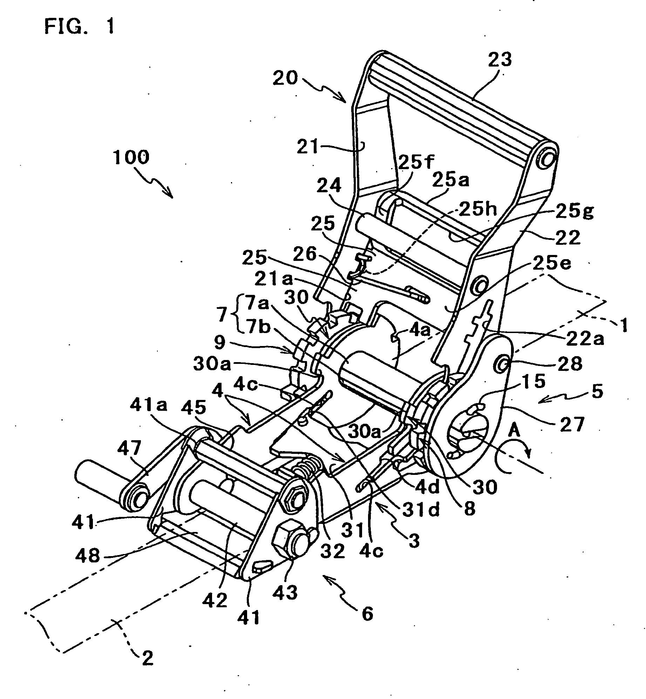

Embodiments of the present invention will be described with reference to FIG. 1 to FIG. 19. As shown in FIG. 1, a belt tightener of the present embodiment includes a body frame 3 to whose one and other longitudinal end portions of a first belt 1 and a second belt 2 are coupled, respectively. The body frame 3 includes flat plate-like frame plates 4 and 4 in left and right pairs widthwise. The distance between these frame plates 4 and 4 is set to a distance greater than the width of the first and second belts 1 and 2.

In addition, at one end portion of the body frame 3, a belt take-up mechanism 5 capable of taking up the first belt 1 in one direction is provided. The belt take-up mechanism 5 has a belt take-up shaft 7 whose both end portions are freely rotatably supported about an axis on the frame plates 4 and 4, and first and second one-way clutches 8 and 9 provided on both end portions of this belt take-up shaft 7. The belt take-up shaft 7 is composed of a pair of shaft members 7a and 7b having almost semicircular sectional shapes, and these shaft members 7a and 7b are coupled and fixed at both end portions by latching members 15.

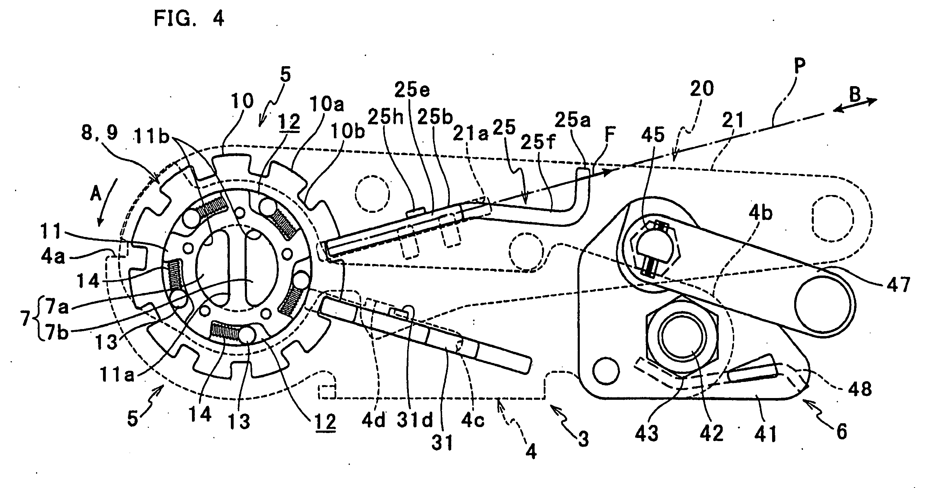

As shown in FIG. 1 and FIG. 4 to FIG. 7, the first and second one-way clutches 8 and 9 each have an inner wheel member 11 through which the belt take-up shaft 7 has been inserted, an outer wheel member 10 externally fitted to this inner wheel member 11 so as to be freely slidable, a plurality of space portions 12 formed between the outer wheel member 10 and inner wheel member 11 so that the gap is gradually enlarged along a circumferential direction (clockwise in FIG. 4), a roller member 13 provided in each space portion 12 and having a diameter equal to the gap of a circumferential middle portion thereof, a coil spring 14 provided in each space portion 12 and is arranged at a moving side (enlarging side of the gap) of the roller member 13 to urge the roller member 13 in a contracting direction (arrow direction A in FIG. 4) of the gap of the space portion 12, and two cover plates 16 and 16 respectively fixed to both side surfaces of the inner wheel member 11 so as to cover the space portion 12.

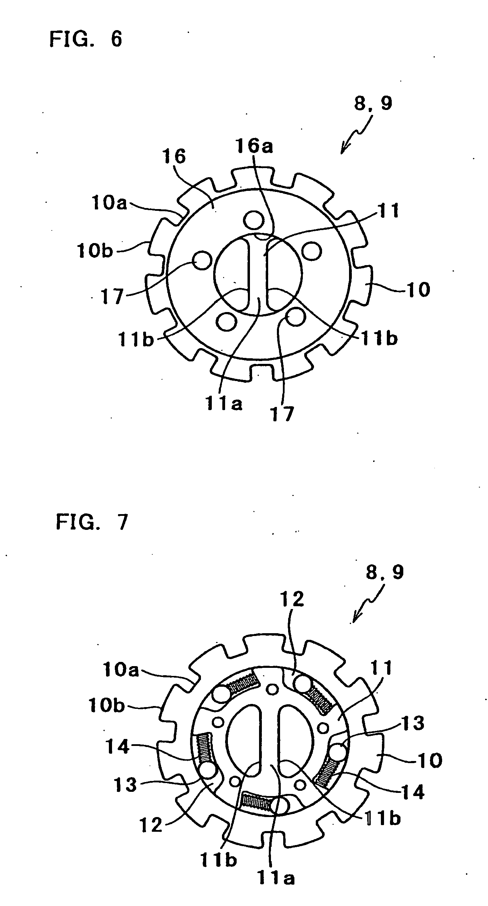

As shown in FIG. 4 and FIG. 7, in an inner circumferential portion of the inner wheel member 11, a pair of shaft member through-holes 11b and 11b are formed symmetrical with respect to a partition portion 11a. Through these shaft member through-holes 11b and 11b, the above-mentioned shaft members 7a and 7b are passed, respectively, and the shaft members 7a and 7b are securely coupled to the inner wheel member 11 in the rotating direction. On the other hand, on the whole outer circumferential surface of the outer wheel member 10, a large number of concave portions 10a and convex portions 10b are formed alternately in the circumferential direction.

And, in the first and second one-way clutches 8 and 9, when the outer wheel member 10 rotates in the arrow direction A (opening direction in which a handle 20 of FIG. 1 opens with respect to the body frame 3), as a result of the roller member 13 urged by the coil spring 14 moving, in the space portion 12, to the reducing direction of the gap thereof and becoming stuck in the middle portion of the space portion 12, the outer wheel member 10 reaches a meshing state with the inner wheel member 11 to rotate. On the other hand, when the outer wheel member 10 rotates in a direction opposite (closing direction in which the handle 20 closes with respect to the main frame 3) the arrow direction A, as a result of the roller member 13 moving, within the space portion 12, in the enlarging direction of the gap while urging the coil spring 14 to become freely rotatable, the outer wheel member 10 reaches a slipping state with respect to the inner wheel member 11.

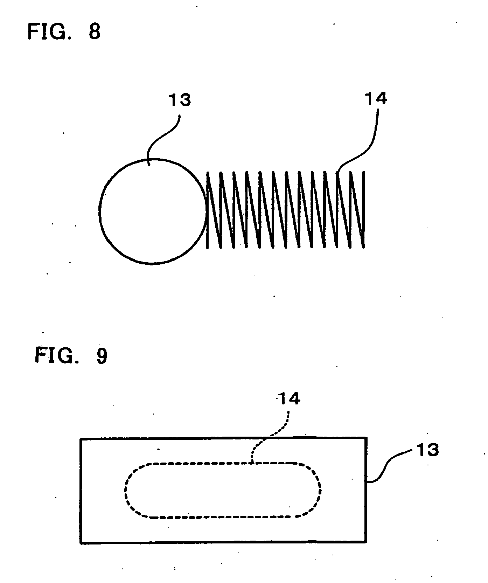

Here, as shown in FIG. 8 and FIG. 9, the roller member 13 is formed in a columnar shape having a length almost equal to the thickness of the inner wheel member 11, and the shape of the coil spring 14 viewed from its expanding and contracting direction (left-hand side of FIG. 8) is an oval shape. Therefore, in comparison with when the roller member 13 is in a spherical shape, a contact area of the roller member 13 with the inner wheel member 11 and outer wheel member 10 is large, so that even with a roller member 13 having a relatively small diameter, it becomes possible to transmit a large load between the inner wheel member 11 and outer wheel member 10. Then, the diameter of the roller member 13 is reduced to the utmost extent allowing transmitting a necessary load so that the outside diameter of the outer wheel member 10 can be reduced as much as possible, whereby the force when turning the outer wheel 10 with the handle 20 to be described later can be reduced.

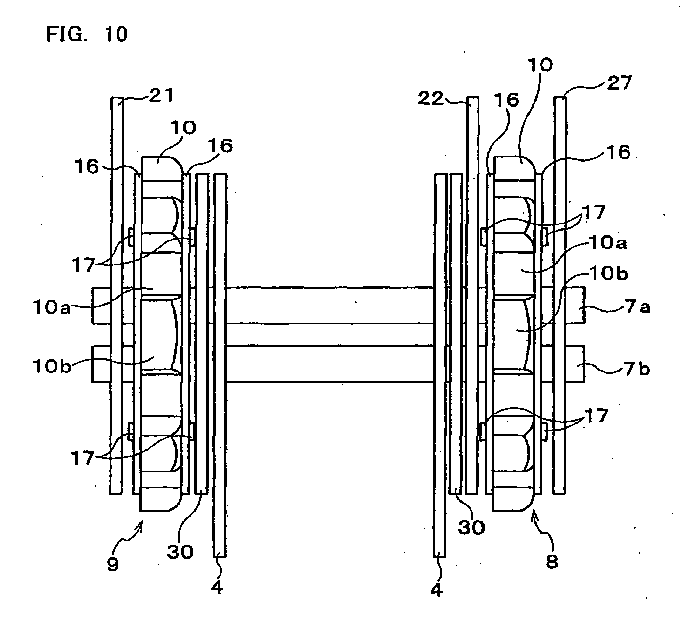

As shown in FIG. 6, at the center parts of the two cover plates 16 and 16, formed are through-holes 16a that overlap the shaft member through-holes 11b and 11b of the inner wheel member 11, and end portions of the two shaft members 7a and 7b are inserted through the through-holes 16a. In addition, each cover plate 16 is clamped by rivets 17 and fixed to the inner wheel member 11, in a surrounding part of the through-hole 16a, at five positions apart at equal intervals in the circumferential direction. Also, as shown in FIG. 10, each rivet 17 is protruded from the surfaces of the cover plates 16. Furthermore, the two cover plates 16 and 16 have outside diameters larger than the inside diameters of the outer wheel members 10, respectively. Therefore, the two cover plates 16 and 16 serve, as shown in FIG. 10, functions to reinforce the outer wheel member 10 from both sides as well as to block up the space portions 12 so that the rollers 13 and coil springs 14 disposed in the space portions 12 do not pop out outside. In addition, by the cover plates 16 and 16 on both side surfaces of the inner wheel member 11, the outer wheel member 10 is prevented from coming off from the inner wheel member 11, and for the first and second one-way clutches 8 and 9, the outer wheel member 10, inner wheel member 11, roller members 13, coil springs 14, and cover plates 16 are integrally formed to be unitized. Although, in the space portions 12, lubricant such as grease to smoothen a sliding movement between the outer wheel member 10 and inner wheel member 11 is injected, since the space portions 12 are blocked by the two cover plates 16 and 16, the lubricant never leaks outside.

The first and second one-way clutches 8 and 9 are attached to the body frame 3 so as to be identical in directions of a slipping state and a meshing state of the outer wheel member 10 and inner wheel member 11. However, as described above, since the space portions 12 of the outer wheel member 10 and inner wheel member 11 have been completely blocked by the cover plates 16 (see FIG. 6), it is not easy to judge a slipping direction and a meshing direction of each one-way clutch 8, 9 from its appearance. Therefore, in the present embodiment, as shown in FIG. 10, a corner of an outer circumferential portion of one side surface (right side surface in FIG. 10) of the outer wheel member 10 is formed round. Therefore, it becomes less likely that both one-way clutches 8 and 9 are oriented incorrectly when being attached, so that an assembling operation of a belt tightener 100 is improved in efficiency.

As shown in FIG. 1, on the belt-take-up shaft 7 that supports both one-way clutches 8 and 9 about an axis, the handle 20 is freely turnablyprovided. The handle 20 has handle support plates 21 and 22 arranged symmetrically at both end portions of the belt take-up shaft 7. These handle support plates 21 and 22 are, at their base end portions, freely turnably supported on the belt take-up shaft 7. In addition, at free end portions of these handle support plates 21 and 22, a grasping member 23 to be grasped by an operator is provided sideways. Furthermore, between the handle support plates 21 and 22, a reinforcing member 24 is provided sideways. This reinforcing member 24 couples and supports both handle support plates 21 and 22 so as to maintain a constant interval between the handle support plates 21 and 22.

As shown in FIG. 1 and FIG. 10, one handle support plates 21 is arranged so as to be adjacent to the outside surface of the second one-way clutch 9, and the other handle support plate 22 is arranged so as to be adjacent to the inside surface of the first one-way clutch 8. Here, as shown in FIG. 10, in each one-way clutch 8, 9, the five rivets 17 (fixing portions) that fix the cover plates 16 to the inner wheel member 11 are protruded from the surfaces of the cover plates 16, respectively, so that gaps exist between the handle support plates 21,22 and cover plates 16, 16. Therefore, when the handle 20 is turned, the handle support plates 21,22 and the cover plates 16, 16 of the first and second one-way clutches 8,9 are not likely to contact each other, whereby the handle 20 can be smoothly turned.

As shown in FIG. 1, on the handle support plates 21 and 22, the first latch 25 is provided so as to be relatively movable. This first latch 25 is, at its both widthwise end portions, inserted through slits 21a and 22a formed respectively in the handle support plates 21 and 22, and supported so as to be freely advanceable and retractable with respect to the handle support plates 21 and 22 so that its front end portion faces the belt take-up shaft 7 side. Furthermore, the first latch 25 is urged in the belt take-up shaft 7 direction by a spring member 26.

In addition, as shown in FIG. 4, the first latch 25 has a flat plate portion 25e that extends parallel to its moving direction (arrow direction B of FIG. 4), a slope portion 25f that extends to the side opposite the belt take-up shaft 7 in a manner slightly inclined in the closing direction (direction opposite the arrow direction A) of the handle 20 with respect to this flat plate portion 25e, and a pull portion 25a provided at an end portion of this slope portion 25f on the side opposite the belt take-up shaft 7. The pull portion 25a is formed so as to bend in the handle opening direction at almost a right angle and protrude from the end portion of the slope portion 25f. Then, as a result of the pull portion 25a being pulled up along the arrow direction B by the operator, the first latch 25 moves in a direction to part from the belt take-up shaft 7 against an urging force of the spring member 26. Moreover, as shown in FIG. 1, in the slope portion 25f, a rectangular through-hole 25g that is long widthwise is formed so as to allow the operator to insert his/her fingertips and easily pull up the pull portion 25a. Meanwhile, as shown in FIG. 4, the pull portion 25a protruded from the slope portion 25f is located on a plane (plane P shown by an alternate long and short dashed line) extended from the flat plate portion 25e to the side opposite the belt take-up shaft 7. Accordingly, since the first latch 25 linearly moves in the direction (along the alternate long and short dashed line P) of a force F applied to the pull portion 25a, the first latch 25 can be moved by a minimum force.

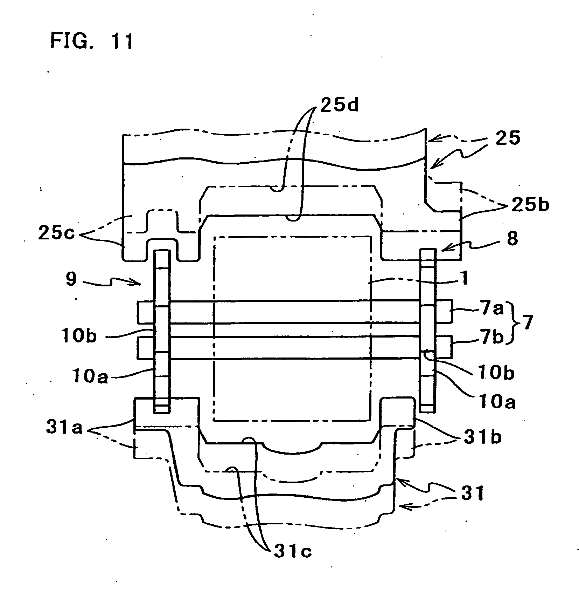

In the front end-side (belt take-up shaft 7-side) part of the flat plate portion 25e of the first latch 25, as shown in FIG. 11, an engaging portion 25b that engages with the concave portion 10a of the first one-way clutch 8 and an engagement avoiding portion 25c that avoids engaging with the concave portion 10a of the second one-way clutch 9 are formed at both widthwise end portions. Furthermore, between the engaging portion 25b and engagement avoiding portion 25c, a housing concave portion 25d is formed, and the housing concave portion 25d prevents, even when the first belt 1 thickens as a result of being taken up by the belt take-up shaft 7, the first belt 1 from contacting the first latch 25. Moreover, the first latch 25 thus constructed, when being applied with only the urging force of the spring member 26 as a result of the operator releasing his/her hand therefrom, engages with the first one-way clutch 8 as shown by an illustrated solid line. On the other hand, when the operator pulls up the first latch 25 to a position of an illustrated alternate long and two short dashed line, engagement with the first one-way clutch 8 is released. In this connection, the first latch 25 never engages with the second one-way clutch 9 regardless of whether being pulled up.

In addition, a lateral side of the engaging portion 25b hangs over to the outside of the first latch 25. The end portion of the engaging portion 25b on the overhang side is, as shown in FIG. 1, freely movably engaged with a support plate member 27. This support plate member 27 is freely turnably supported about an axis on the belt take-up shaft 7, and further, while being parallel-arranged via the first one-way clutch 8 to the handle support plate 22, is coupled and fixed by a shaft-like coupling member 28. Thereby, the engaging portion 25b is supported by the handle support plate 22 and support plate member 27 in the turning direction to exhibit a high rigidity between both members 22 and 27, and is never bent by a reaction force at the take-up time even when the first belt 1 is taken up by turning the belt take-up shaft 7 via the first one-way clutch 8. Moreover, since the support plate member 27 is coupled and fixed to the handle support plate 22, the handle 20 and support plate member 27 integrally turn. Accordingly, rattling when the handle 20 is turned is reduced, so that operability is improved.

Also, as shown in FIG. 1, FIG. 3A, and FIG. 4, on a surface (surface on the rear side of the sheet in FIG. 1) of the first latch 25, at positions slightly inside further than the two handle support plates 21 and 22, formed are two circular first convex portions 25h and 25h, respectively. Moreover, since these two first convex portions 25h and 25h guide a relative movement of the first latch 25 with respect to the handle support plates 21 and 22, rattling is reduced and the first latch 25 is more easily moved, so that operability is improved. In addition, since rattling can be prevented even without strict control of machining accuracy of the first latch 25 and the slits 21a and 22a in the handle support plates 21 and 22, there is also an advantage in the aspect of a component cost. Furthermore, by the first convex portions 25h and 25h, the first latch 25 is also prevented from coming off from the slits 21a and 22a.

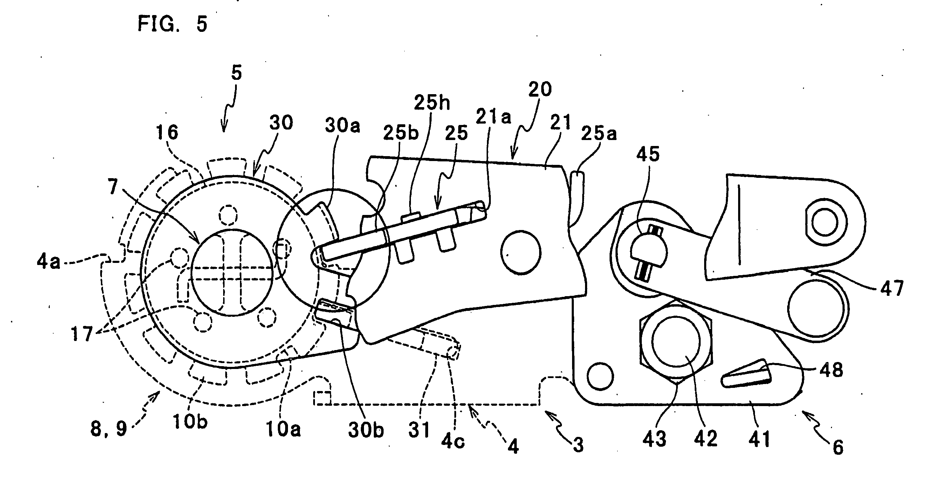

In addition, as shown in FIG. 1 and FIG. 10, at both end portions of the belt take-up shaft 7, provided are stopper members 30 and 30, respectively. The stopper member 30 on the first one-way clutch 8 side is arranged between the frame plate 4 and handle support plate 22, while the stopper member 30 on the second one-way clutch 9 side is arranged between the second one-way clutch 9 and frame plate 4. On an outer circumferential surface of each stopper member 30, as shown in FIG. 5, formed are protruded portions 30a set to be almost identical in height to the convex portions 10b of the first and second one-way clutches 8 and 9. Each protruded portion 30a is made so as to be able to abut against the engaging portion 25b and engagement avoiding portion 25c of the first latch 25 of FIG. 11, respectively, and is made so as to be able to avoid abutting by pulling up of the first latch 25. Moreover, these respective protruded portions 30a and 30a set end points of take-up actions by the handle 20, and make the handle 20 take a locking posture to restrict a belt loosening mechanism 6 to be described later from operating. Furthermore, on the stopper member 30, formed below the protruded portions 30a are latching concave portions 30b. With the latching concave portion 30b, a front end portion of the second latch 31 is fitted, and by the second latch 31, the stopper member 30 is restricted from turning.

This second latch 31 is, at its both widthwise end portions, inserted through slits 4c and 4c respectively formed in the frame plates 4 and 4, and supported so as to be freely relatively movable with respect to the handle support plates 21 and 22 so that its front end portion faces the belt take-up shaft 7 side. In addition, to a rear end portion of the second latch 31, coupled is a coil spring 32 in a compressed state. The coil spring 32 urges the second latch 31 in the belt take-up shaft 7 direction.

In the front end-side (belt take-up shaft 7-side) part of the second latch 31, as shown in FIG. 11, an engaging portion 31a that engages with the concave portion 10a of the second one-way clutch 9 and an engagement avoiding portion 31b that avoids engaging with the concave portion 10a of the first one-way clutch 8 are formed at both widthwise end portions. Furthermore, between the engaging portion 31a and engagement avoiding portion 31b, a housing concave portion 31c is formed, and the housing concave portion 31c prevents, even when the first belt 1 thickens as a result of being taken up by the belt take-up shaft 7, the first belt 1 from contacting the second latch 31. Moreover, the second latch 31 thus constructed, as is also shown in FIG. 11, when being located on the belt take-up shaft 7 side shown by an illustrated solid line by an urging force of the spring member 32, engages with the second one-way clutch 9, while when the second latch 31 retracts to a retracting position shown by an illustrated alternate long and two short dashed line, engagement with the second one-way clutch 9 is released. In this connection, the second latch 31 never engages with the first one-way clutch 9 regardless of whether being pulled up.

The aforementioned second latch 31 is retracted by the handle 20. That is, the base end portions of the handle support plates 21 and 22 of the handle 20 are formed in slightly protruded curved shapes, and these base endportions abut against the front end of the second latch 31 to thereby retract the second latch 31 in the retracting direction. In addition, as shown in FIG. 1, at a longitudinal end portion of the frame plate 4, a handle latching portion 4a is formed. The handle latching portion 4a is, when the handle 20 takes an opening posture where this is turned so as to retract the second latch 31 to the retracting position, fitted with the first latch 25 to thereby restrict the handle 20 from turning. In addition, the handle latching portion 4a is, as shown in FIG. 11, set to a depth to avoid engagement with the engaging portion 25b of the first latch 25. Thereby, when the handle 20 is brought into an opening posture by the handle latching portion 4a, as shown by the alternate long and two short dashed lines of FIG. 11, engagement of the first and second latch 25 and 31 with the first and second one-way clutches 8 and 9 is completely avoided, and the belt take-up shaft 7 becomes freely rotatable with respect to the frame plate 4.

Also, as shown in FIG. 1, FIG. 2A, and FIG. 4, on a surface (upper surface) of the second latch 31, at positions slightly further inside than the two frame plates 4 and 4, formed are two circular second convex portions 31d and 31d, respectively. Moreover, since these two second convex portions 31d and 31d guide a relative movement of the second latch 31 with respect to the body frame 3, rattling is eliminated, and the second latch 31 can be smoothly moved. In addition, since rattling can be prevented even without strict control of machining accuracy of the second latch 31 and the slits 4c in the frame plates 4, there is also an advantage in the aspect of a component cost.

In addition, as shown in FIG. 1 and FIG. 4, in the frame plate 4, continuously from the slit 4c, also formed is a notch portion 4d through which the second convex portion 31d of the second latch 31 can be inserted. Moreover, at the time of assembling of the belt tightener 100, while inserting the second convex portion 31d through this notch portion 4d, the second latch 31 is inserted through the slit 4c. Then, while pressing the second latch 31 in a direction (right-hand side of FIG. 4) to separate from the belt take-up shaft 7 against the urging force of the spring member 31, the stopper members 30 and 30 are to be attached to both end portions of the belt take-up shaft 7, respectively. That is, the second latch 31 is maintained in a state pressed, by the stopper members 30, 30 to the side opposite the belt take-up shaft 7. Thereupon, as shown in FIG. 4, the second convex portion 31d is located apart to the right from the belt take-up shaft 7 further than the notching portion 4d. That is, the positional relationship between the second convex portion 31d of the second latch 31 and notch portion 4d is displaced in terms of the moving direction of the second latch 31, after an attachment of the second latch, this second latch 31 is latched by the second convex portion 31d, and is prevented from coming off from the slit 4c.

In the belt take-up mechanism 5 constructed as in the above, as shown in FIG. 1, by turning the handle 20 in the opening direction to open with respect to the body frame 3 while pulling up the first latch 25, the handle 20 is brought into an opening posture, and by turning the handle 20 in the opposite direction (closing direction), into a locking posture. In addition, when the handle 20 is turned without pulling up the first latch 25, the first latch 25 abuts against the protruded portions 30a of the stopper members 30 and handle support plates 21 and 22 before the handle 20 is brought into each posture. Moreover, by alternately turning the handle 20 in the closing direction and the opening direction between the both postures, the belt take-up shaft 7 can be made to take up the first belt 1 to be described later.

At the other end portion of the body frame 3 on whose one end portion the aforementioned belt take-up mechanism 5 is provided, provided is the belt loosening mechanism 6 that gradually unwind the second belt 2. The belt loosening mechanism 6 has slope surfaces 4b for which the respective frame plates 4 and 4 are inclined to the downside toward the endportion side, loosening support plates 41 and 41 fixedly provided on the respective frame plates 4 and 4 and arranged in parallel, and a first shaft 42 provided sideways between the frame plates 4 and 4 and that guides the second belt 2 in a manner overlapped therewith. At both end portions of the first shaft 42, nuts 43 and 43 are screwed therewith, and each nut 43 fastens the loosening support plate 41 onto the frame plate 4.

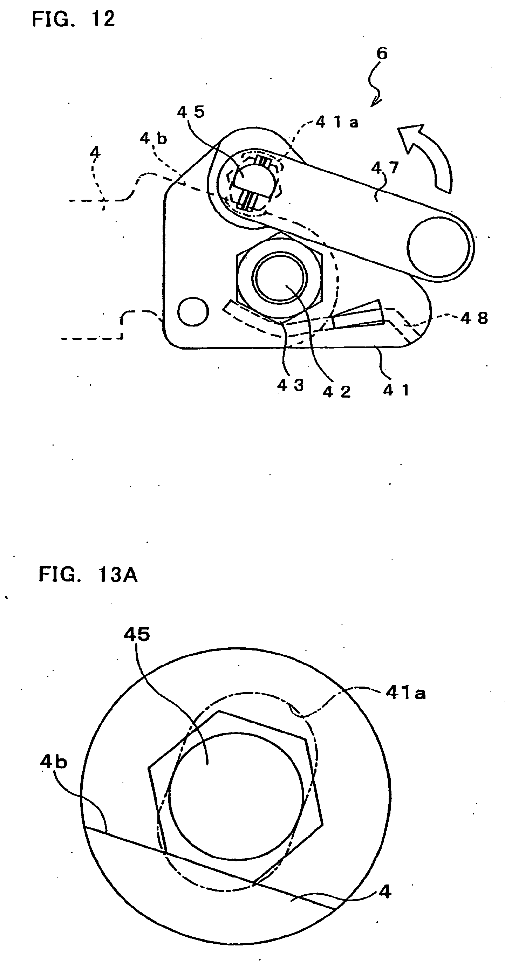

As shown in FIG. 12, each loosening support plate 41 is formed and attached so that a vertex portion is located at its upper end portion, and a region from the vertex portion to its one end portion side is in a state exposed from the frame plate 4. In the vertex portion of the loosening support plate 41, a slotted hole 41a is formed. The slotted hole 41a is set so that its long axis direction is orthogonal to the slope surface 4b. Through the slotted holes 41a and 41a of the loosening support plates 41 and 41 opposed to each other, inserted is the second shaft 45 around which the second belt 2 guided from the first shaft 42 is wound.

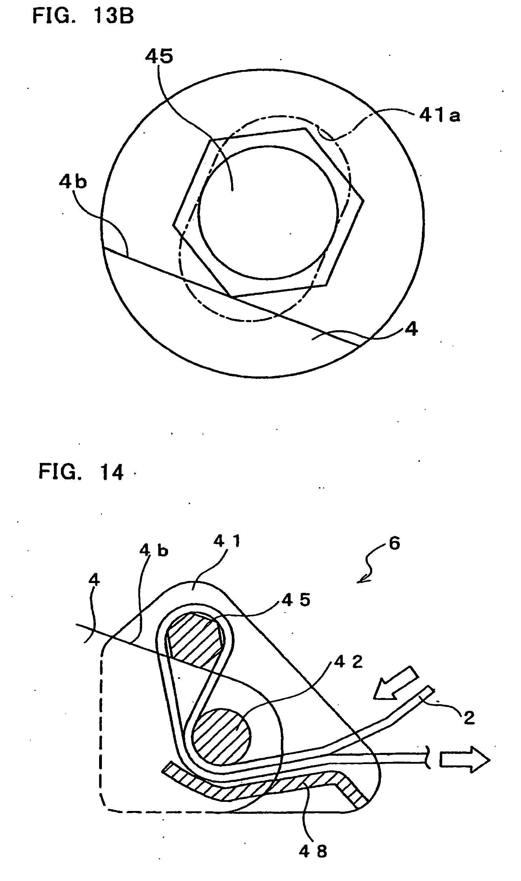

The aforementioned second shaft 45 is formed, at its both end portions, in cross-sectional circular shapes, and is formed, at its part excluding these both end portions, in a cross-sectional hexagonal shape. Moreover, the cross-sectional hexagonal-shaped part of this second shaft 45 is abutted against the upper end of the slope surface 4b of the frame plate 4 almost vertical to the axis line of the slotted hole 41a. Furthermore, at one end portion of the second shaft 45, a turning lever 47 to turn the second shaft 45 is fixedly provided. Thereby, as shown in FIG. 14, for the belt loosening mechanism 6, the second shaft 45 is abutted against the slope surface 4b of the frame plate 4 in a tensioned state of the second belt 2. Then, as shown in FIG. 12, when the turning lever 47 is turned in an arrow direction, the second shaft 45 turns while being abutted against the slope surface 4b and moves within the slotted hole 41a in the up-and-down direction to thereby slightly unwind the second belt 2.

In addition, below the first shaft 42, provided is a belt retaining member 48 that sandwiches the second belt 2. The belt retaining member 48 is turnably supported on the frame 4. Moreover, the belt retaining member 48 is structured so that, as a result of one end being pressed by the second belt 2, the other end sandwiches the second belt 2 with the first shaft 42.

In the aforementioned construction, actions of the belt tightener 100 will be described.

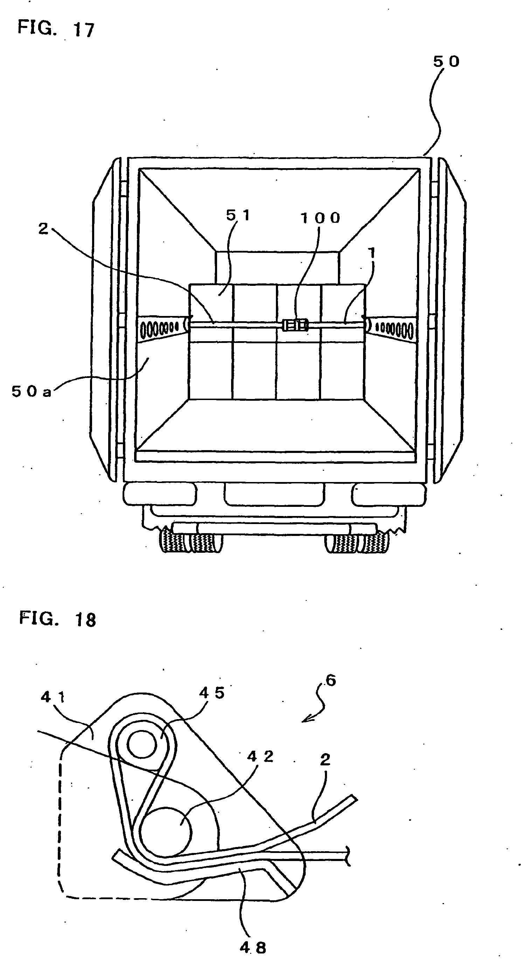

(Attaching Operation) First, when fixing a load 51 on the bed of a truck 50, as shown in FIG. 17, respective one ends of the first and second belts 1 and 2 coupled to the belt tightener 100 are fixed to sidewalls 50a of the truck 50.

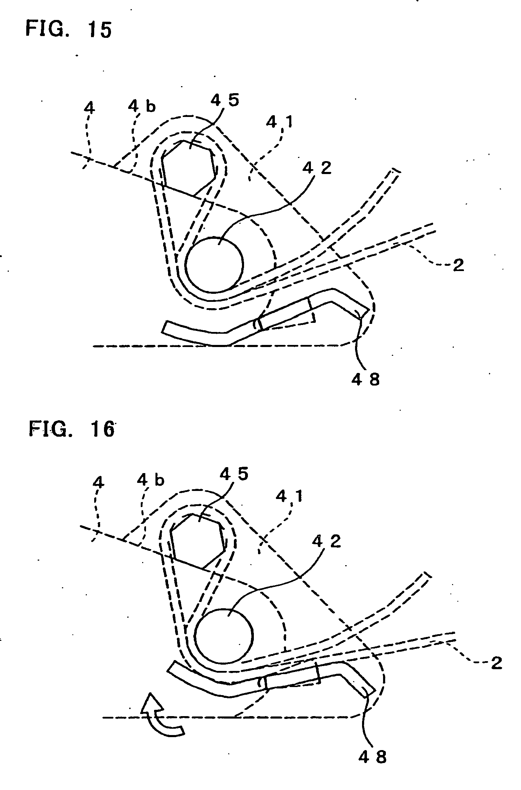

Concretely, as shown in FIG. 15, the second belt 2 is coupled to the belt loosening mechanism 6. This coupling is conducted by inserting the front end of the second belt 2 between the first shaft 42 and belt retaining member 48 therethrough from the outside, pulling up the second belt 2 in the second shaft 45 direction, and then winding around this second shaft 45, pulling down in the first shaft 42 direction, inserting between the first shaft 42 and belt retaining member 48 therethrough from the inside and pulling. As a result, as shown in FIG. 16, when tension is produced in the second belt 2, the belt retainer member 48 turns in the arrow direction to press its upper surface to the first shaft 42 side, to thereby sandwich the secondbelt 2 overlapped double toprevent loosening. In addition, as shown in FIG. 1, when the first belt 1 is coupled to the belt take-up mechanism 5, a front end portion of the first belt 1 is inserted between the shaft members 7a and 7b of the belt take-up shaft 7 therethrough from the outside, and is pulled so as to produce tension in the second belt 2 and first belt 1.

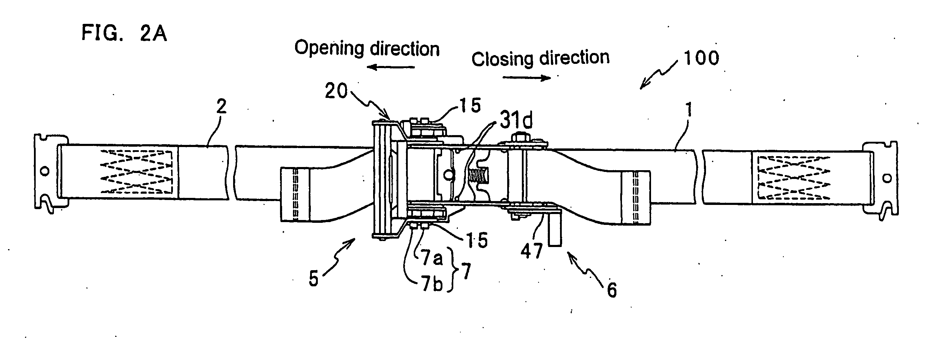

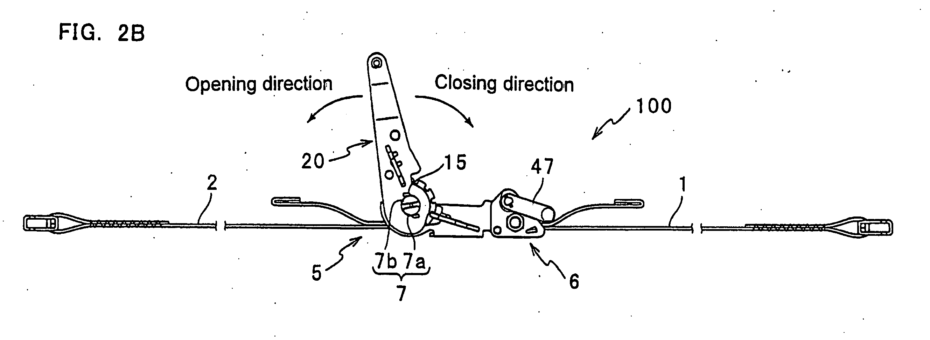

(Lashing Operation) After completion of the attaching operation, subsequently, the grasping member 23 is grasped to turn, as shown in FIG. 2A and FIG. 2B, the handle 20 back and forth. When the handle 20 is turned in the closing direction to close with respect to the body frame 3, as shown in FIG. 11, since the latching portion 25b of the first latch 25 has been engaged with the concave portion 10a of the first one-way clutch 8, as shown in FIG. 4, the outer wheel member 10 receives a force to be turned in the closing direction which is an opposite direction to the arrow direction A. Also, since the second one-way clutch 9 has not engaged with the first latch 25, this never receives a force in the closing direction.

When the outer wheel member 10 of the first one-way clutch 8 turns upon receiving the force in the closing direction, as shown in FIG. 4 and FIG. 7, in the space portion 12 between the outer wheel member 10 and inner wheel member 11, the roller member 13 moves to the larger-gap side while compressing the coil spring 14 to become freely rotatable, the outer wheel member 10 and inner wheel member 11 reach a state independent of each other. That is, the turn of the outer wheel member 10 is not transmitted to the inner wheel member 11. Accordingly, the outer wheel member 10 is turned by the handle 20 in a slipping state with respect to the inner wheel member 11.

On the other hand, in the second one-way clutch 9, when tension is produced in the first belt 1, a force in the unwinding direction (opposite direction to the arrow direction A) acts on the inner wheel member 11 via the belt take-up shaft 7. And, in this case, similar to when the outer wheel member 10 receives a force in the arrow direction A (opening direction), the roller member 13 moves to the narrower-gap side of the space portion 12 to be stuck, thus resulting in a state where the inner wheel member 11 and the outer wheel member 10 are meshed with each other by the roller member 13. However, the outer wheel member 10 of the second one-way clutch 9 has been restricted from turning by the second latch 31 provided on the body frame 3. Accordingly, when the handle 20 is turned in the closing direction, a turn of the belt take-up shaft 7 is restricted by the second one-way clutch 9, so that the first belt 1 is never unwound. Moreover, when the first latch 25 abuts against the protruded potion 30a of the stopper member 30, a further turn in the closing direction is restricted.

Next, as shown in FIG. 4, when the handle 20 is turned in the opening direction (arrow direction A), the outer wheel member 10 of the first one-way clutch 8 engaged with the first latch 25 of the handle 20 turns upon receiving the force in the opening direction. At this time, the roller member 13 moves to the narrower-gap side of the space portion 12 to result in a state where the outer wheel member 10 and inner wheel member 11 are meshed with each other. Thereby, the turn of the outer wheel member 10 is transmitted to the inner wheel member 11, the belt take-up shaft 7 supported about an axis on the inner wheel member 11 is turned in the opening direction, and the first belt 1 is taken up by the belt take-up shaft 7.

And, as shown in FIG. 2A and FIG. 2B, by repeating the turns of the handle 20 in the opening direction and closing direction as in the above, the first belt 1 is taken up on the belt take-up shaft 7 to produce tension therein. Also, at the time of a turn of the handle 20, the first and second latch 25 and 31 never hit the gear to cause a collision noise to occur as in the conventional ratchet type belt tightener.

Also, when turning the handle 20 in the opening direction to take up the first belt 1, since, via the engaging portion 25b of the first latch 25 engaged with the outer wheel member 10, the force from the handle 20 acts on only the first one-way clutch 8 fixed to one end portion of the belt take-up shaft 7, the first one-way clutch 8 is easily distorted. However, as described above, the two cover plates 16 have been respectively fixed to both side surfaces of the inner wheel member 11 of the one-way clutch 8, 9 and the outer wheel member 10 has been reinforced by the two cover plates 16 from both sides, strength of the one-way clutch 8, 9 as a whole is increased to be less likely to be distorted. Therefore, it becomes possible to turn the handle 20 by a smaller force. In addition, as shown in FIG. 10, the five rivets 17 (fixing portions) to fix the cover plate 16 to the inner wheel member 11 are respectively protruded from the surfaces of the cover plate 16, and a gap exists between the handle support plate 21, 22 and cover plate 16. Therefore, even if the one-way clutch 8, 9 has been distorted, because of the gap formed between the cover plate 16 and handle support plate 21, 22, it is less likely that the one-way clutch 8, 9 contacts the handle support plate 21, 22, so that it becomes less likely that a turn of the handle 20 is obstructed.

Furthermore, since the inner wheel member 11, outer wheel member 10, roller members 13, coil springs 14, and two cover plates 16 of the one-way clutch 8, 9 have been integrally formed so that the one-way clutch 8, 9 have been unitized, even if the one-way clutch 8, 9 is distorted, the one-way clutch 8, 9 can be easily replaced.

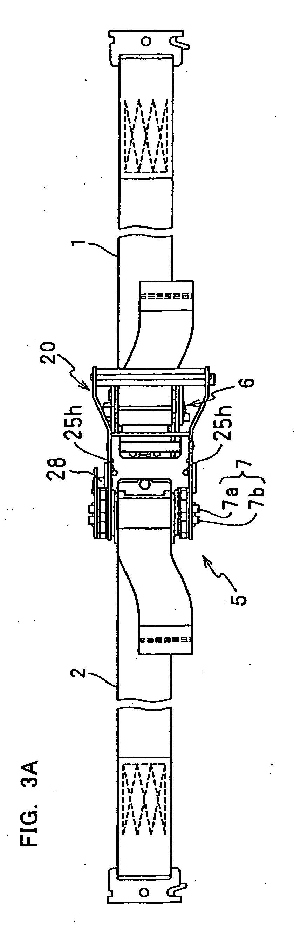

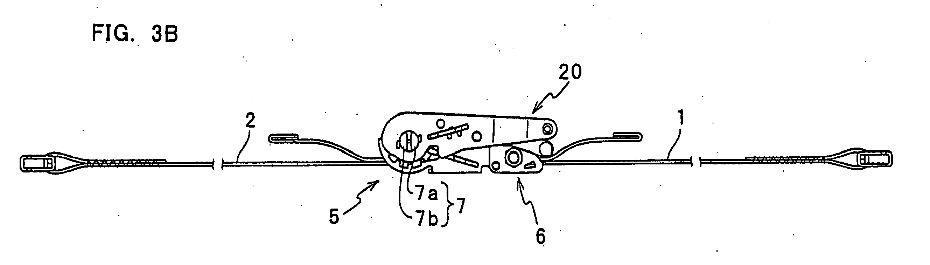

After tension is sufficiently produced in the first belt 1, as shown in FIG. 5, by pulling up the pull portion 25a of the first latch 25, the front end of the first latch 25 is set to a position higher than the protruded portion 30a of the stopper member 30. And, as shown in FIG. 3A and FIG. 3B, when the handle 20 is further turned in the closing direction beyond the protruded portion 30a, the first latch 25 is pulled down. Thereby, a turn of the first latch 25 in the opening direction is restricted by the protruded portion 30a. As a result, by the free end side of the handle 20 approximating or abutting against the turning lever 47 of the belt loosening mechanism 6, the belt loosening mechanism 6 used in a releasing operation of the second belt 2 to be described later reaches a locked state.

Also, as shown in FIG. 4, the pull portion 25a protruded from the slope portion 25f is located on the plane P extended from the flat plate portion 25e to the side opposite the belt take-up shaft 7. Accordingly, since the first latch 25 linearly moves in the direction of the force F applied to the pull portion 25a, the first latch 25 can be moved by a minimum force.

(Releasing Operation) When the load 51 is unloaded after producing a sufficiently large tension in the first belt 1 and the second belt 2 by the belt tightener 100 as in the above, first, by the handle 20 being turned in the opening direction, the locked state of the belt loosening mechanism 6 is released. Then, as shown in FIG. 12, the turning lever 47 of the belt loosening mechanism 6 is turned in the arrow direction.

Thereby, the second shaft 45 coupled to the turning lever 47 is turned. At this time, as shown in FIG. 14, since the second belt 2 has been wound around the second shaft 45, this has been urged in the first shaft 42 direction by a large tension, however, as shown in FIG. 13A and FIG. 13B, by the second shaft 45 moving up and down within the slotted hole 41a while abutting against the slope surface 4b of the frame plate 4 due to the turn, the second belt 2 is slightly unwound. And, as shown in FIG. 14, a loosened part of the second belt 2 is drawn out between the first shaft 42 and belt retaining member 48. And, by restoring the turning lever 47 to its original position and again performing a turning operation, the tension of the second belt 2 can be gradually reduced. Also, the second shaft 45 has been formed in a cross-sectional hexagonal shape at its part excluding both end portions, and this part has been abutted against the slope surface 4b of the frame plate 4. This allows reliably performing unwinding of the second belt 2.

Thereafter, when the tension of the second belt 2 has sufficiently declined, while pulling up the first latch 25, the handle 20 is turned sufficiently in the opening direction. Then, by fitting the front end of the first latch 25 with the handle latching portion 4a (see FIG. 1, FIG. 4, and FIG. 5) and retracting the second latch 31 by the bottom surface of the handle 20, engagement between the first and second latches 25 and 31 and the first and second one-way clutches 8 and 9 are released. As a result, the belt take-up shaft 7 supported about an axis on the first and second one-way clutches 8 and 9 becomes freely rotatable, and the first belt 1 is unwound by a remaining tension and an operator' s operation, and detached from the truck sidewall 50a. Also, in this case, the large tension of the first belt 1 has been gently reduced, a large noise never occurs due to a rapid change in tension.

As in the above, the belt take-up mechanism 5 of the belt tightener 100 of the present embodiment includes the belt take-up shaft 7 which is supported about an axis on the body frame 3 and by which the first belt 1 is taken up, the handle 20 supported about an axis on the body frame so as to be coaxial with the belt take-up shaft 7, the first one-way clutch 8 and the second one-way clutch 9 both fixed to the belt take-up shaft 7 and set in an identical direction in terms of a slipping state and a meshing state, the first latch 25 provided so as to be relatively movable on the handle 20 and engageable with and disengageable from the first one-way clutch 8 while being urged to the belt take-up shaft 7 side, and the second latch 31 provided so as to be relatively movable on the body frame 3 and engageable with and disengageable from the second one-way clutch 9 while being urged to the belt take-up shaft 7 side.

Moreover, while the first latch 25 is engaged with the first one-way clutch 8 and the second latch 31 is engaged with the second two-way clutch 9, the handle 20 is turned in the closing direction (direction where both one-way clutches 8 and 9 reach a slipping condition). Then, since the first one-way clutch 8 is in a slipping state, the turn of the handle 20 (first latch 25) is not transmitted to the belt take-up shaft 7, so that the first belt 1 is not taken up. Next, when the handle 20 is turned in the opening direction (direction where both one-way clutches 8 and 9 reach a meshing state), this turn of the handle (first latch 25) is transmitted to the belt take-up shaft 7 via the first one-way clutch 8, so that the belt is taken up by the belt take-up shaft 7. Also, at the time of a take-up operation of the first belt 1, due to the tension of the first belt 1 taken up by the belt take-up shaft 7, a force in the belt unwinding direction always acts on the belt take-up shaft 7, however, since the second latch 31 has been engaged with the second one-way clutch 9, a turn of the belt take-up shaft 7 in the belt unwinding direction is restricted, so that the first belt 1 is never unwound.

Accordingly, at the time of a turn of the handle 20 when producing tension in the belt 1, the first latch 25 and the second latch 31 never hit the outer wheel member 10 of the one-way clutch 8, 9, so that no such large noise occurs as a collision noise between the ratchet gear and latch pawl as in the conventional ratchet type belt tightener.

In addition, at the take-up time of the first belt 1, a force from the handle 20 acts on only the first one-way clutch 8 fixed to one end portion of the belt take-up shaft 7, however, since the two cover plates 16 have been respectively fixed to both side surfaces of the inner wheel member 11 of the one-way clutch 8, 9, strength of the one-way clutch 8, 9 as a whole is increased to be less likely to be distorted. Accordingly, the handle 20 can be turned lightly by a smaller force. Furthermore, by the cover plates 16 and 16 on both side surfaces of the inner wheel member 11, the outer wheel member 10 is prevented from coming off from the inner wheel member 11, and the inner wheel member 11, outer wheel member 10, and two cover plates 16 have been integrally formed so that the one-way clutch 8, 9 has been unitized, and thus even if the one-way clutch 8, 9 has been distorted, the one-way clutch 8, 9 can be easily replaced.

Also, the first convex portion 25h that guides a relative movement of the first latch 25 with respect to the handle 20 and the second convex portion 31d that guides a relative movement of the second latch 31 with respect to the frame 4 are not limited in shapes to those in the embodiment described above, and these may, for example, be extended long in the moving directions of the first and second latches 25 and 31. In addition, the first convex portion 25h and the second convex portion 31d may be formed of separate members from the first and second latches 25 and 31.

It is not always necessary that the notch portion 4d through which, at the time of assembly of the belt tightener 100, the second convex portion 31d is inserted is formed on both of the two frame plates 4, and this may be formed on only one of the frame plates 4.

In addition, it is not necessary that the second shaft 45 is in a cross-sectional hexagonal shape, this may be in a polygonal shape equal to or more polygonal than a cross-sectional triangular shape, a circular shape, or an oval shape, and may, as shown in FIG. 18, be in a cam shape. In addition, it is sufficient that the second shaft 45 is in a cross-sectional polygonal shape, an oval shape, or a cam shape at, at least, its part abutting against the slope portion 4b. Furthermore, it is desirable that the second shaft 45 is applied, at its circumferential surface, with an anti-slip processing such as knurling for the second belt 2. This allows further reliably performing unwinding of the second belt 2.

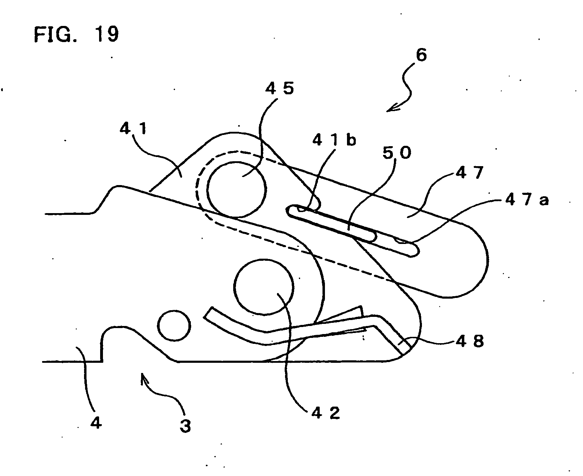

In addition, the belt tightener 100 of the present embodiment is constructed with a locking means that restricts a turn of the second shaft 45. That is, as shown in FIG. 3A and FIG. 3B, by using the handle 20 as the locking means and bringing this handle 20 into a locking posture, a decline in tension, after sufficiently producing tension in the first belt 1 and the second belt 2, due to turning of the second shaft 45 can be prevented. However, this locking means is not limited to such a construction as described above. For example, as shown in FIG. 19, the locking means may be constructed with a locking slotted hole 47a that is formed within the turning lever 47 and whose major axis direction is made coincident with the longitudinal direction of the turning lever 47, a lock plate 50 provided so as to be freely advanceable and retractable in this locking slotted hole 47a, and a notched portion 41b that is formed in a loosening support plate 41 and with which a front end portion of the lock plate 50 is engaged. In this case, a locked state can be realized by only the belt loosening mechanism 6 without regard to the posture of the handle 20. Furthermore, in this case, the second shaft 45 maybe in a circular shape and be merely freely turnably supported on the body frame 3.

Also, in the present embodiment, the belt tightener 100 includes both the belt take-up mechanism 5 and belt loosening mechanism 6, however, the present invention is not limitedhereto, and the belt tightener 100 may include only the belt take-up mechanism 5.

### Brief Description of Drawings

[FIG. 1] A perspective view of a belt tightener.
[FIG. 2A] A plan view (take-up time of the first belt) of a belt tightener.
[FIG. 2B] A front view (take-up time of the first belt) of a belt tightener.
[FIG. 3A] A plan view (locked state) of a belt tightener.
[FIG. 3B] A front view (locked state) of a belt tightener.
[FIG. 4] A schematic configuration diagram of the main part of a belt tightener.
[FIG. 5] A schematic configuration diagram showing, in a partially broken state, a belt tightener.
[FIG. 6] A front view of a one-way clutch.
[FIG. 7] A front view of a one-way clutch with cover plates detached.
[FIG. 8] A front view of a roller member and a coil spring.
[FIG. 9] A view from the left of the roller member and coil spring of FIG. 8.
[FIG. 10] An enlarged plan view in the vicinity of a belt take-up shaft of a belt tightener.
[FIG. 11] An explanatory view showing an engaging state of one-way clutches and latches.
[FIG. 12] A schematic configuration diagram of a belt loosening mechanism.
[FIG. 13A] An explanatory view showing a first shaft lowered in a slotted hole.
[FIG. 13B] An explanatory view showing a first shaft raised in a slotted hole.
[FIG. 14] An explanatory view showing a guiding path of a second belt in a belt loosening mechanism.
[FIG. 15] An explanatory view showing a second belt released from a belt retaining member in a belt loosening mechanism.
[FIG. 16] An explanatory view showing a second belt sandwiched by a belt retaining member in a belt loosening mechanism.
[FIG. 17] An explanatory view of a belt tightener of the present embodiment provided on a truck.
[FIG. 18] An explanatory view of a belt loosening mechanism of a modification.
[FIG. 19] An explanatory view of a belt loosening mechanism (locked state) of another modification.

### Description of Symbols

1 First belt
2 Second belt
3 Body frame
4 Frame plate
4c Slit
4d Hole
5 Belt take-up mechanism
7 Belt take-up shaft
8 First one-way clutch
9 Second one-way clutch
10 Outer wheel member
11 Inner wheel member
12 Space portion
13 Roller member
14 Coil spring
16 Cover plate
17 Rivet
20 Handle
21, 22 Handle support plate
23 Grasping member
25 First latch
25a Pull portion
25e Flat plate portion
25f Slope portion
25h First convex portion
31 Second latch
31d Second convex portion
100 Belt tightener

## Claims

1. A belt tightener (100) to whose one end portion and other end portion a first belt and a second belt are coupled, respectively, and which produces and releases tension for these belts, the belt tightener having:
a body frame (3); and
a belt take-up mechanism (5) provided at one end portion of the body frame and is capable of taking up and unwinding the first belt, wherein
the belt take-up mechanism comprises:
a belt take-up shaft which (7) is supported about an axis on the body frame and by which the first belt is taken up;
a handle (20) supported about an axis on the body frame so as to be coaxial with the belt take-up shaft;
a first one-way clutch (8) and a second one-way clutch (9) provided on the belt take-up shaft (7) and set in an identical direction in terms of a slipping state and a meshing state;
a first latch (25) provided so as to be relatively movable on the handle (20) and engageable with and disengageable from the first one-way clutch (8) while being urged to the belt take-up shaft side; and
a second latch (31) provided so as to be relatively movable on the body frame (3) and engageable with and disengageable from the second one-way clutch (9) while being urged to the belt take-up shaft side,
each one-way clutch (9) has an inner wheel member (11) through which the belt take-up shaft is inserted and an outer wheel member (10) externally fitted to this inner wheel member so as to be freely slidable,
**characterized in that** a cover plate (16) is fixed to each side surface of each inner wheel member which
blocks a space portion (12) between the outer wheel member (10) and the inner wheel member (11), respectively, and the inner wheel member (11), the outer wheel member (10), and the two cover plates (16) are integrally formed.

2. The belt tightener according to Claim 1, wherein
a fixing portion (17) of the inner wheel member (11) and the cover plate (16) is protruded from a surface of the cover plate (16), and a gap exists between the handle (20) and the cover plate (16).

3. The belt tightener according to Claim 1, wherein
a corner on one side surface of the outer wheel member (10) is formed round.

4. The belt tightener according to Claim 1, wherein
the space portion between the outer wheel member (10) and the inner wheel member (11) is formed so that its gap is enlarged along a circumferential direction,
in the space portion, a roller member (13) having a diameter equal to the gap at a circumferential middle portion thereof and a coil spring (14) that urges this roller member in a contracting direction of the gap of the space portion,
the roller member (12) is formed in a columnar shape having a length almost equal to a thickness of the inner wheel member, and
a shape of the coil spring (14) viewed from its expanding and contracting direction is an oval shape.

5. The belt tightener according to Claim 1, wherein
the first latch (25) has a flat plate portion (25e) that extends parallel to its moving direction, a slope portion (25f) that extends to a side opposite the belt take-up shaft (7) in a state inclined with respect to the flat plate portion, and a pull portion (25a) provided at an end portion of this slope portion (25f) on the side opposite the belt take-up shaft, and
the pull portion (25a) is located on a plane extended from the flat plate portion (25e) to the side opposite the belt take-up shaft (7).

6. The belt tightener according to Claim 1, wherein
the handle (20) has two handle support plates (21, 22) arranged symmetrically at both end portions of the belt take-up shaft (7), and a grasping member (23) provided at end portions of these two handle support plates (21, 22) on a side opposite the belt take-up shaft (7),
the first latch (25) is supported so as to be relatively movable on the two handle support plates (21, 22), and
on a surface of the first latch, formed are two first convex portions (25h) that guide a relative movement with respect to the two handle support plates (21, 22).

7. The belt tightener according to Claim 1, wherein
the body frame (3) has two frame plates (4) that support both end portions of the belt take-up shaft (7) about axes, respectively,
the second latch (31) is supported so as to be relatively movable on the two frame plates (4) and
on a surface of the second latch (31), formed are two second convex portions (31d) that guide a relative movement with respect to the two frame plates (4).

8. The belt tightener according to Claim 7, wherein
in the two frame plates (4), slits (4c) through which the second latch (31) is inserted are formed, respectively,
further, in at least one of the frame plates (4), continously from the slit, formed is a notch portion (4d) through which the second convex portion (31d) of the second latch (31) can be inserted, and
in a state where the second latch (31) has been inserted through the slits (4c) of the two frame plates (4) and supported, the notch portion (4d) and the second convex portion (31d) are displaced in terms of a moving direction of the second latch (31).

## Patentansprüche

1. Gurtstraffer (100), an dessen einem Endbereich bzw. anderen Endbereich ein erster Gurt bzw. einer zweiter Gurt angebracht ist, und welcher für diese Gurte Spannung erzeugt und freigibt, wobei der Gurtstraffer Folgendes aufweist:
einen Körperrahmen (3); und
einen Gurtaufwickelmechanismus (5), der an einem Endbereich des Körperrahmens angeordnet und in der Lage ist, den ersten Gurt aufzuwickeln und abzuwickeln, wobei
der Gurtaufwickelmechanismus Folgendes umfasst:
eine Gurtaufwickelwelle (7), die um eine Achse an dem Körperrahmen gelagert ist und mittels welcher der erste Gurt aufgewickelt wird;
einen Handgriff (20), der um eine Achse an dem Körperrahmen derart gelagert ist, dass er koaxial zu der Gurtaufwickelwelle verläuft;
eine erste Einwegkupplung (8) und eine zweite Einwegkupplung (9), die an der Gurtaufwickelwelle (7) angeordnet und im Hinblick auf einen Rutschzustand sowie einen Einrückzustand in einer identischen Richtung eingestellt sind;
eine erste Klinke (25), die an dem Handgriff (20) relativ zu diesem beweglich angeordnet ist und mit der ersten Einwegkupplung (8) in Eingriff sowie außer Eingriff gebracht werden kann, während sie in Richtung der Gurtaufwickelwellenseite gedrückt wird; und
eine zweite Klinke (31), die an dem Körperrahmen (3) relativ zu diesem beweglich angeordnet ist und mit der zweiten Einwegkupplung (9) in Eingriff sowie außer Eingriff gebracht werden kann, während sie in Richtung der Gurtaufwickelwellenseite gedrückt wird,
wobei jede Einwegkupplung (9) ein inneres Radelement (11), durch welches die Gurtaufwickelwelle gesteckt ist, und ein äußeres Radelement (10) aufweist, das von außen an dieses innere Radelement derart angepasst ist, dass es frei gleiten kann,
**dadurch gekennzeichnet, dass**
an jeder Seitenfläche jedes inneren Radelements jeweils eine Abdeckplatte (16) befestigt ist, welche einen Raumbereich (12) zwischen dem äußeren Radelement (10) und dem inneren Radelement (11) blockiert, und dass das innere Radelement (11), das äußere Radelement (10) und die beiden Abdeckplatten (16) integral ausgebildet sind.

2. Gurtstraffer nach Anspruch 1, bei welchem
ein Befestigungsbereich (17) des inneren Radelements (11) und der Abdeckplatte (16) aus einer Oberfläche der Abdeckplatte (16) hervorsteht und zwischen dem Handgriff (20) und der Abdeckplatte (16) ein Spalt existiert.

3. Gurtstraffer nach Anspruch 1, bei welchem
eine Ecke auf einer Seitenfläche des äußeren Radelements (10) rund ausgebildet ist.

4. Gurtstraffer nach Anspruch 1, bei welchem
der Raumbereich zwischen dem äußeren Radelement (10) und dem inneren Radelement (11) derart ausgebildet ist, dass sein Spalt entlang einer Umfangsrichtung größer wird,
in dem Raumbereich ein Rollenelement (13) mit einem Durchmesser, der dem Spalt in seinem mittleren Umfangsbereich entspricht, und eine Schraubenfeder (14) vorgesehen sind, welche dieses Rollenelement in eine Kontraktionsrichtung des Spaltes des Raumbereichs drückt,
das Rollenelement (12) säulenförmig ausgebildet ist und eine Länge aufweist, die nahezu gleich einer Dicke des inneren Radelements ist, und
eine Form der Schraubenfeder (14) in ihrer Expansions- und Kontraktionsrichtung betrachtet eine ovale Form ist.

5. Gurtstraffer nach Anspruch 1, bei welchem
die erste Klinke (25) einen flachen Plattenbereich (25e), der sich parallel zu ihrer Bewegungsrichtung erstreckt, einen Neigungsbereich (25f), der sich zu einer der Gurtaufwickelwelle (7) gegenüber liegenden Seite in einem Zustand erstreckt, in welchem er gegenüber dem flachen Plattenbereich geneigt ist, und einen Zugbereich (25a) aufweist, der an einem Endbereich dieses Neigungsbereiches (25f) auf der der Gurtaufwickelwelle gegenüber liegenden Seite angeordnet ist, und
der Zugbereich (25a) in einer Ebene angeordnet ist, die sich von dem flachen Plattenbereich (25e) zu der der Gurtaufwickelwelle (7) gegenüber liegenden Seite erstreckt.

6. Gurtstraffer nach Anspruch 1, bei welchem
der Handgriff (20) zwei Handgriffträgerplatten (21, 22), die symmetrisch an beiden Endbereichen der Gurtaufwickelwelle angeordnet sind, und ein Greifelement (23) aufweist, welches auf einer der Gurtaufwickelwelle (7) gegenüber liegenden Seite an den Endbereichen dieser beiden Handgriffträgerplatten (21, 22) angeordnet ist,
die erste Klinke (25) derart gelagert ist, dass sie an den beiden Handgriffträgerplatten (21, 22) relativ zu diesen bewegbar ist, und
an einer Oberfläche der ersten Klinke zwei erste konvexe Bereiche (25h) ausgebildet sind, welche eine Relativbewegung bezüglich der beiden Handgriffträgerplatten (21, 22) führen.

7. Gurtstraffer nach Anspruch 1, bei welchem
der Körperrahmen (3) zwei Rahmenplatten (4) aufweist, welche jeweils einen Endbereich der Gurtaufwickelwelle (7) um eine Achse tragen,
die zweite Klinke (31) derart gelagert ist, dass sie an den beiden Rahmenplatten (4) relativ zu diesen bewegbar ist, und
an einer Oberfläche der zweiten Klinke (31) zwei zweite konvexe Bereiche (31d) ausgebildet sind, welche eine Relativbewegung bezüglich der beiden Rahmenplatten (4) führen.

8. Gurtstraffer nach Anspruch 7, bei welchem
in den beiden Rahmenplatten (4) jeweils ein Schlitz (4c) ausgebildet ist, durch welchen die zweite Klinke (31) hindurch gesteckt ist,
des weiteren in wenigstens einer der Rahmenplatten (4) kontinuierlich von dem Schlitz ausgehend ein Aussparungsbereich (4d) ausgebildet ist, durch welchen der zweite konvexe Bereich (31d) der zweiten Klinke (31) hindurch gesteckt werden kann, und
in einem Zustand, in welchem die zweite Klinke (31) durch die Schlitze (4c) der beiden Rahmenplatten (4) hindurch gesteckt und gelagert wurde, der Aussparungsbereich (4d) und der zweite konvexe Bereich (31d) im Hinblick auf eine Bewegungsrichtung der zweiten Klinke (31) verschoben werden.

## Revendications

1. Dispositif de serrage de sangle (100) sur une première partie d'extrémité et une autre partie d'extrémité duquel sont couplées respectivement une première sangle et une seconde sangle, et qui produit et libère une tension sur ces sangles, le dispositif de serrage de sangle comportant :
un bâti principal (3) et
un mécanisme d'enroulement de sangle (5) agencé au niveau d'une première partie d'extrémité du bâti principal et qui permet d'enrouler et de dérouler la première sangle, dans lequel
le mécanisme d'enroulement de sangle comprend :
un arbre d'enroulement de sangle (7) qui est supporté autour d'un axe sur le bâti principal et par lequel une première sangle est enroulée ;
une poignée (20) supportée autour d'un axe sur le bâti principal de manière à être coaxial avec l'arbre d'enroulement de sangle ;
un premier embrayage unidirectionnel (8) et un second embrayage unidirectionnel (9) agencés sur l'arbre d'enroulement de sangle (7) et positionnés dans un sens identique en termes d'état glissant et d'état d'entraînement ;
un premier verrou (25) agencé de manière à être relativement mobile sur la poignée (20) et pouvant être couplé au premier embrayage unidirectionnel (8) et séparé de ce dernier tout en étant appliqué du côté de l'arbre d'enroulement de sangle ; et
un second verrou (31) agencé de manière à être relativement mobile sur le bâti principal (3) et pouvant être couplé au second embrayage unidirectionnel (9) et séparé de ce dernier tout en étant appliqué du côté de l'arbre d'enroulement de sangle,
chaque embrayage unidirectionnel (9) présente un élément de roue interne (11) à travers lequel l'arbre d'enroulement de sangle est inséré et un élément de roue externe (10) assemblé à l'extérieur sur cet élément de roue interne de manière à pouvoir coulisser librement,
**caractérisé en ce que** une plaque de couvercle (16) est fixée sur chaque surface latérale des éléments de roue interne qui bloque une partie de l'espace (12) respectivement entre l'élément de roue externe (10) et l'élément de roue interne (11), et **en ce que** l'élément de roue interne (11), l'élément de roue externe (10) et les deux plaques de couvercle (16) sont formés de manière unitaire.

2. Dispositif de serrage de sangle selon la revendication 1, dans lequel
une partie de fixation (17) de l'élément de roue interne (11) et de la plaque de couvercle (16) est en saillie à partir d'une surface de la plaque de couvercle (16), et il existe un jeu entre la poignée (20) et la plaque de couvercle (16).

3. Dispositif de serrage de sangle selon la revendication 1, dans lequel
un angle sur une surface latérale de l'élément de roue externe (10) est formé de manière arrondie.

4. Dispositif de serrage de sangle selon la revendication 1, dans lequel
la partie d'espace entre l'élément de roue externe (10) et l'élément de roue interne (11) est formée de telle sorte que son jeu est élargi suivant une direction circonférentielle,
dans la partie d'espace, un élément formant rouleau (13) présentant un diamètre égal au jeu au niveau de la partie centrale circonférentielle de celle-ci et un ressort hélicoïdal (14) qui applique cet élément de rouleau dans une direction de contraction du jeu de la partie d'espace,
l'élément de rouleau (12) est réalisé en une forme de colonne présentant une longueur presque égale à une épaisseur de l'élément de roue interne, et
une forme du ressort hélicoïdal (14) vu depuis sa direction de dilatation et de contraction est une forme ovale.

5. Dispositif de serrage de sangle selon la revendication 1, dans lequel
le premier verrou (25) présente une partie en plaque plate (25e) qui s'étend parallèlement à sa direction de déplacement, une partie inclinée (25f) qui s'étend vers un côté opposé de l'arbre d'enroulement de sangle (7) dans un état incliné par rapport à la partie en plaque plate, et une partie d'entraînement (25a) agencée au niveau d'une partie d'extrémité de cette partie inclinée (25f) du côté opposé de l'arbre d'enroulement de sangle, et
la partie d'entraînement (25a) est située sur un plan s'étendant à partir de la partie en plaque plate (25e) vers le côté opposé de l'arbre d'enroulement de sangle (7).

6. Dispositif de serrage de sangle selon la revendication 1, dans lequel
la poignée (20) comporte deux plaques de support de poignée (21, 22) agencées symétriquement au niveau des deux parties d'extrémité de l'arbre d'enroulement de sangle (7), et un élément de saisie (23) agencé au niveau des parties d'extrémité de ces deux plaques de support de poignée (21, 22) sur un côté opposé à l'arbre d'enroulement de sangle (7),
le premier verrou (25) est supporté de manière à être relativement mobile sur les deux plaques de support de poignée (21, 22), et
sur une surface du premier verrou, deux premières parties convexes (25h) qui guident un mouvement relatif par rapport aux deux plaques de support de poignée (21, 22) sont formées.

7. Dispositif de serrage de sangle selon la revendication 1, dans lequel :
le bâti principal (3) comporte deux plaques de bâti (4) qui supportent respectivement les deux parties d'extrémité de l'arbre d'enroulement de sangle (7) autour d'axes,
le second verrou (31) est supporté de manière à être relativement mobile sur les deux plaques de bâti (4) et
sur une surface du second verrou (31), deux secondes parties convexes (31d) qui guident un mouvement relatif par rapport aux deux plaques de bâti (4) sont formées.

8. Dispositif de serrage de sangle selon la revendication 7, dans lequel :
sur les deux plaques de bâti (4), des fentes (4c) à travers lesquelles est inséré le second verrou (31) sont respectivement formées,
en outre, sur au moins l'une des plaques de bâti (4), de manière continue par rapport à la fente, est formée une partie d'encoche (4d) à travers laquelle la seconde partie convexe (31d) du second verrou (31) peut être insérée, et
dans un état dans lequel le second verrou (31) a été inséré à travers les fentes (4c) des deux plaques de bâti (4) et est supporté, la partie d'encoche (4d) et la seconde partie convexe (31d) sont déplacées suivant une direction de déplacement du second verrou (31).
